# EUROPEAN PATENT APPLICATION

(11) **EP 4 759 600 A1**
(43) Date of publication of application: **17.06.2026**
(21) Application number: 24220359.4
(22) Date of filing: 16.12.2024
(51) Int. Cl.: B60K 28/10, B60R 21/00, G01L 9/00

(54) **SENSOR ASSEMBLY FOR DETECTING IMMERSION OF A VEHICLE IN WATER**

(71) Applicant: Veoneer Sweden Safety Systems AB, 10302 Stockholm (SE)
(72) Inventor: FOUILLEUL, Antoine, 95800 Cergy-Pontoise (FR); FITZPATRICK John, 95800 Cergy-Pontoise (FR)
(74) Representative: Reichert & Lindner Partnerschaft Patentanwälte

(57) **Abstract**

A sensor assembly (1) for detecting immersion of a vehicle (100) in water is disclosed. A structural element (10) of the vehicle (100) is used to hold the sensor assembly (1). At least the flexible and deformable volume (7) must be under water level so that an immersion in water can be detected. To measure a pressure increase the flexible and deformable volume (7) need to be in fluid communication with the least one sensor housing (2, 3).

## Description

The invention relates to a sensor assembly for detecting immersion of a vehicle in water. The sensor assembly comprising at least one pressure sensor in at least one sensor housing. At least one sensor housing is in fluid connection to a flexible and deformable volume filled with air.

The European Patent EP 3 835 137 B1 relates to an impact sensor assembly for detecting for example the impact of a pedestrian with a vehicle. The impact sensor assembly comprises at least sensor housing which is connected to a flexible and deformable tube. The at least one sensor housing is mounted on the surface of one electric device casing.

The US-Patent US 10,605,686 B2 describes a mountable sensor to which closed air volume can be attached.

Pressure sensors are available in car or vehicle at different locations. In the front bumper a pedestrian detection is possible. Inside the side doors a side impact can be detected.

Vehicle submergence (vehicle entering a body of water or being surrounded by rising flood water for example) is, thankfully, a relatively rare occurrence in most European countries. However, when it does occur the outcome for the occupants is often very serious. Therefore, it is necessary to reliably detect the event of submergence, so that side windows or door can still be operated for long enough to allow the occupants to exit the vehicle.

It is an object of the invention to come up with a robust sensor assembly for reliably detecting the immersion of the vehicle in water.

The above object is achieved by a sensor assembly as claimed in claim 1.

A structural element of the vehicle holds the sensor assembly At least one opening or a passageway, allows ingress of water into the structural element. Here the water acts on the flexible and deformable volume and to increase the pressure inside the flexible and deformable volume, which is measured by the pressure sensor of the at least sensor housing. Each sensor housing is in fluid communication with the flexible and deformable volume.

The advantage of the invention is that the pressure of water is used to measure the water level. Due to the robustness a reliable reading of the sensor assembly is achieved. The inventive sensor assembly is more robust than a humidity sensor or an electrode impedance sensor that are sensitive to moisture and contaminations.

A pressor sensor of the sensor assembly measures as well the change of ambient pressure. This ambient pressure change increases slowly during altitude change. In case of an immersion event the measured pressure change changes quickly if immersion occurs.

According to one possible embodiment, the structural element is a case at a bottom of the vehicle. The case holds the flexible and deformable volume, which is affected by the immersion in water. Preferably the case is positioned in the middle of the bottom of the vehicle.

According to a further possible embodiment, the structural element is at least door of the vehicle. The flexible and deformable volume is placed inside the door of the vehicle.

According to another possible embodiment the structural element is a pillar of the vehicle. The flexible and deformable volume is placed inside the pillar of the vehicle.

It is evident for a person skilled in the art, that more than one structural element can be used to place the flexible and deformable volume of the sensor assembly.

The at least one sensor housing with the pressure sensor can be attached directly to the flexible and deformable volume or the at least one sensor housing with the pressure sensor can be attached indirectly to the flexible and deformable volume. In case of an indirect attachment a fluid connection is provided to connect the flexible and deformable volume with the sensor housing.

The sensor assembly, respectively at least the flexible and deformable volume should be directly in contact with water, so it must be under water level. The sensor assembly can be connected to a pipe, tube or closed volume. The sensor assembly can be located anywhere. The minimal requirement is that at least the flexible and deformable volume (extremity of the sensor assembly) must be under the water level to detect the pressure change caused by the immersion in water.

At least the sensor assembly can be a part of a motor vehicle. The sensor assembly is suitable to detect the grade of immersion or emersion of a motor vehicle in water. The sensor assembly is connected to an electronic control unit (ECU), which calculates the grade of immersion or emersion of the motor vehicle in water. Additionally, the sensor assembly can be suitable to measure the presence of water as well, which means that both measurements are combined in the sensor assembly.

According to the calculation of the ECU, actions can be initiated aid the occupants in exiting the vehicle. The actions are: door opening possible with 12V vehicle battery disconnected, electric window opening functionality check and door opening from inside still possible (Functionality of manual override shall be checked with following procedure with vehicle in static condition). Additionally, vehicle occupants shall activate central lock to lock all the doors, with child safety lock system in disengaged mode. Furthermore, the electrical supply should be disconnected, either at system level (For example central locking, controller, etc.) or should be disconnected from the main battery supply. The opening of the doors from inside needs to be possible using internal controls within two minutes. The electric window opening check (Front row only and only one window, left or right side) needs to be carried out.

According to a further embodiment of the motor vehicle, a water sensor is provided which is as well connected to the ECU. The advantage of the additional water sensor is that a delay of the action to be initiated by the ECU, based on the reading of the sensor assembly is possible. The delay is important so that the correct action is initiated at the right time.

Below, the invention and its advantages will be discussed with reference to the accompanying schematic figures.
**Figure 1** is a schematic representation of a prior art sensor assembly for measuring a pressure change.
**Figure 2** shows a prior art arrangement of the sensor assembly for detecting a pedestrian impact.
**Figure 3** shows a possible embodiment of an additional water sensor in combination with an inventive sensor assembly.
**Figure 4A** shows one possible embodiment to arrange the sensor assembly a vehicle to determine the immersion of the vehicle in water.
**Figure 4B** shows a side view of the sensor assembly as shown in Fig 4A.
**Figure 5** shows a further embodiment of the sensor assembly to determine the immersion of the vehicle in water.
**Figure 6** shows an additional embodiment of the sensor assembly to determine the immersion of the vehicle in water.
**Figure 7** is a diagram showing the rate of pressure change and absolute pressure during immersion and emersion of the vehicle in water.

The figures only show examples of how the invention can be implemented and are not to be taken as a limitation of the invention to the examples shown.

### DETAILED DESCRIPTION

In the ensuing description, numerous specific details are provided to enable maximum understanding of the embodiments that are provided by way of example. The embodiments may be implemented with or without specific details, or else with other methods, components, materials, etc. In other circumstances, well-known structures, materials, or operations are not illustrated or described in detail so that various aspects of the embodiments will not be obscured. Reference of the present description to "an embodiment" or "one embodiment" means that a particular structure, peculiarity, or characteristic described in connection with its implementation is comprised in at least one embodiment.

Same reference numerals refer to same elements or elements of similar function throughout the various figures. Furthermore, only reference numerals necessary for the description of the respective figure are shown in the figures. The embodiments shown represent only examples of how the invention can be carried out. This should not be regarded as a limitation of the invention.

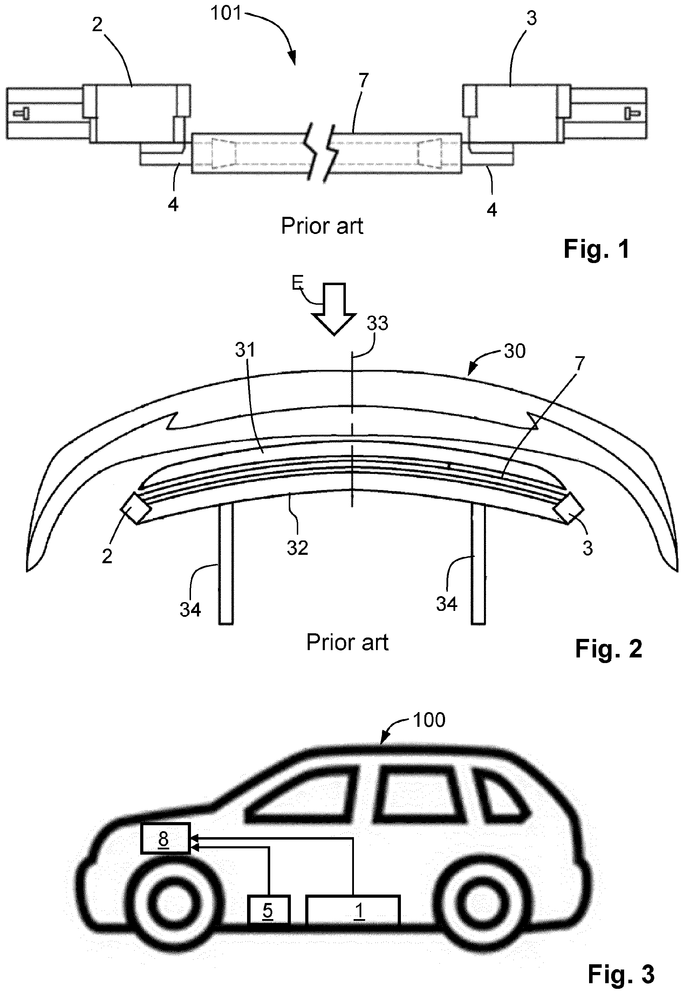

**Figure 1** schematically shows an impact sensor assembly 101 of a prior art embodiment. The embodiment of the impact sensor assembly 101 shown here comprises a first sensor housing 2 and a second sensor housing 3. As shown, each of the first sensor housing 2 and the second sensor housing 3 include a barbed tube connection 4. A flexible and deformable volume 7, which can have the form of a tube, extends between the first sensor housing 2 and the second sensor housing 3. The flexible and deformable tube 7 generates a pressure pulse which is detected by internal pressure sensors within the first sensor housing 2 and the second sensor housing 3. The impact sensor assembly 101 is applicable to a variety of motor vehicle 100 types including sedan-type passenger cars.

It is evident for a skilled person that impact sensor assembly 101 is not limited to first sensor housing 2 and a second sensor housing 3 and a flexible tube connecting both. The minimal requirements for impact sensor assembly 101 is a closed flexible and deformable volume 7 filled with air and connected at least to a sensor housing 2 or 3 for measuring a pressure change.

**Figure 2** is a schematic view showing the installation position of the prior art impact sensor assembly 101 (see Fig. 1). The impact sensor assembly 101 is mounted behind a fascia 30 and may also be mounted behind an energy absorbing material 31. A cross beam 32 extends laterally from a vehicle centerline 33 and is supported by longitudinal beams 34 in an axial direction with respect to vehicle centerline 33. An impact of front end E deforms fascia 30, compressing the deformable tube 7 between the fascia 30 and the cross beam 32, thereby generating the pressure signal mentioned previously. At both ends of deformable tube 7, the first sensor housing 2 and the second sensor housing 3 with the pressure sensor are located.

**Figure 3** shows a possible embodiment of the inventive sensor assembly 1 in combination with an additional water sensor 5. Data from the inventive sensor assembly 1 and the additional water sensor 5 of the motor vehicle 100 are sent to an electronic control unit 8 of the motor vehicle 100. The water sensor 5 (for example a resistive sensor) is used to just the presence water or not (a water level or not). With the sensor assembly 1 (pressure sensor) it is possible to estimate the level of water in the motor vehicle 100, and also the depth of immersion of the vehicle in water.

The presence of the additional water sensor 5 is at best explained by the following example. In case the vehicle 100 falls from a bridge into water it is immersed a few meters under water level. The water sensor 5 detects the presence of water and sends respective data to an electronic control unit 8 (ECU). Sensor assembly 1 detects the level of immersion in water and the respective data are sent as well to the ECU 8. The ECU 8 calculates a time delay for the opening the windows. The time delay might be a few seconds until the vehicle returns to the water surface.

It is evident for a person skilled in the art that the presence of a separate pressure sensor is one possible embodiment and should not be regarded as a limitation of the invention. In Fig. 3 there is a water sensor 5 (resistive sensor) and a separate sensor assembly 1 (pressure sensor). It is evident that the measurement of the presence of water (pressure sensor) and the level of immersion (sensor assembly 1) can be done both with only one pressure sensor which is represented by the sensor assembly 1.

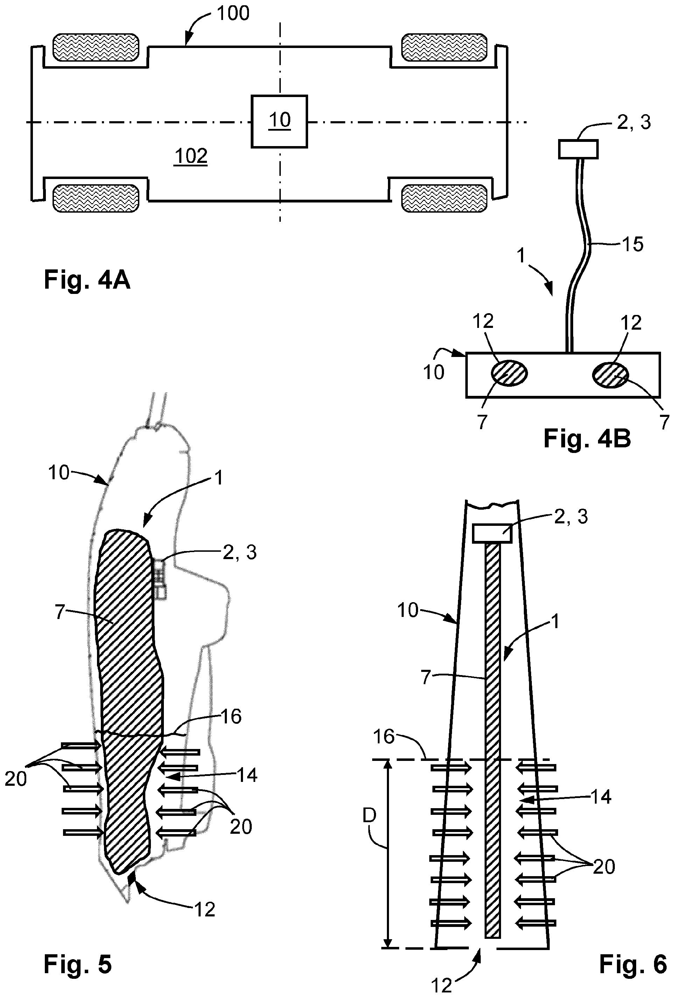

**Figure 4A** shows one possible embodiment to arrange the sensor housing 2, 3 to determine the immersion of the vehicle 100 in water. At a bottom 102 of the vehicle 100 the structural element 10 (a case) is placed, which can take up the flexible and deformable volume 7 (see Fig. 4B).

**Figure 4B** shows a side view of the structural element 10 which holds the sensor assembly 1. According to the possible embodiment the flexible and deformable volume 7 is placed in the structural element 10 (case). At least one opening 12 in the structural element 10 allows the ingress of water, when the vehicle 100 is immersed in water. The water acts on the flexible and deformable volume 7 and increases the pressure inside the flexible and deformable volume 7. The pressure increase or decrease is communicated, according to the embodiment shown in Fig. 4B, via a fluid connection 15 to the sensor housing 2, 3 and/or the ECU 8.

**Figure 5** shows a further embodiment of the sensor assembly 1 to determine the immersion of the vehicle100 in water. According to this embodiment the structural element 10 is at least one door of the vehicle 100. The flexible and deformable volume 7 is placed inside the door of vehicle 100. The door has at least one opening 12 at the lower end which allows the ingress of water 14. According to the depth of immersion of the vehicle 100 a certain water level 16 forms inside the door. The water 14 inside the door exerts a pressure 20 on the flexible and deformable volume 7, which causes a pressure increase inside the flexible and deformable volume 7.

The pressure increase is measured via the at least one sensor housing 2, 3, which is directly attached to the flexible and deformable volume 7.

**Figure 6** shows an additional embodiment of the sensor assembly 1 for determining the immersion of the vehicle 100 in water. The structural element 10 is a pillar of the vehicle 100 and the flexible and deformable volume 7 of the sensor assembly is placed inside the pillar of the vehicle 100. As already mentioned before at least one opening 12 is form at a lower end of the pillar. The pressure increase depends on the depth D of immersion of the flexible and deformable volume 7 in the water 14.

According to the embodiment shown here, the flexible and deformable volume 7 is a tube which carries the at least one sensor housing 2, 3 on one end. At the opposite end the tube is closed.

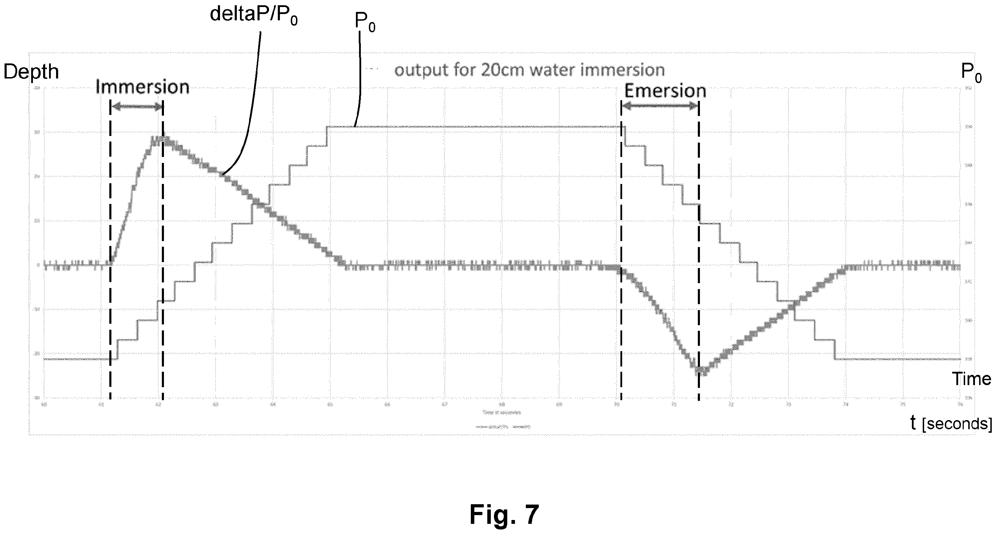

**Figure 7** is a diagram showing the rate of pressure change deltaP/P₀ and the absolute pressure P₀ during immersion and emersion of the vehicle 100 in water. The sensor assembly 1 was immersed 20 cm deep in water. The time of immersion took approximately one second. The graph representing deltaP/P₀ allows to verify the time of immersion and the immersion speed. The same parameters can be determined for the emersion. It's easy to measure water level and confirm immersion speed. The graph representing P₀ shows the stepwise pressure increase during immersion and the pressure decrease during emersion.

It is believed that the present disclosure and many of its attendant advantages will be understood by the foregoing description, and it will be apparent that various changes may be made in the form, construction, number and arrangement of the components without departing from the disclosed subject matter or without sacrificing all of its material advantages. The form described is merely explanatory, and it is the intention of the following claims to encompass and include such changes. Accordingly, the scope of the invention should be limited only by the claims appended hereto.

### List of Reference Signs

- 1: Sensor assembly
- 2: First sensor housing
- 3: Second sensor housing
- 5: Water sensor
- 4: Connection
- 7: Flexible and deformable volume
- 8: Electronic control unit
- 10: Structural element
- 12: Opening
- 14: Water
- 15: Fluid connection
- 16: Water level
- 20: Pressure
- 30: Fascia
- 31: Energy absorbing material
- 32: Cross beam
- 33: Vehicle centerline
- 34: Longitudinal beam
- 100: Motor vehicle
- 101: Impact sensor assembly
- 102: Bottom
- D: Depth
- E: Front end
- P₀: Absolute pressure
- deltaP/P₀: Rate of pressure change

## Claims

1. A sensor assembly (1) for detecting a level of immersion of a vehicle (100) in water comprising at least one pressure sensor in at least one sensor housing (2, 3), wherein the at least one sensor housing (2, 3) is in fluid connection to a flexible and deformable volume (7) filled with air,
**characterized in that**:
• a structural element (10) of the vehicle (100) holds the sensor assembly (1); and
• at least one opening (12) which allows ingress of water into the structural element (10) to act on the flexible and deformable volume (7) and to increase the pressure inside the flexible and deformable volume (7) to be measured by the at least one sensor housing (2, 3) which is in fluid communication with the flexible and deformable volume (7).

2. The sensor assembly (1) claimed in claim 1, wherein the structural element (10) is a case at a bottom (102) of the vehicle (100) and the case holds the flexible and deformable volume (7).

3. The sensor assembly (1) claimed in claim 1, wherein the structural element (10) is at least one door of the vehicle (100) and the flexible and deformable volume (7) is placed inside the door of the vehicle (100).

4. The sensor assembly (1) claimed in claim 1, wherein the structural element (10) is a pillar of the vehicle (100) and the flexible and deformable volume (7) is placed inside the pillar of the vehicle (100).

5. The sensor assembly (1) as claimed in the preceding claims, wherein the at least one sensor housing (2, 3) is attached directly to the flexible and deformable volume (7) or the at least one sensor housing (2, 3) is attached indirectly to the flexible and deformable volume (7) via fluid connection (15).

6. A motor vehicle (100) with a sensor assembly (1) for detecting grade of immersion or emersion of a motor vehicle (100) in water according to one of the preceding claims.

7. The motor vehicle (100) as claimed in claim 6 the sensor assembly (1) is connected to an electronic control unit (8), which determines the grade of immersion or emersion of the motor vehicle (100) in water and the presence of water.

8. The motor vehicle (2) as claimed in claim 6, wherein a water sensor (5) to measure the presence of water and a sensor assembly (1) for measuring the water level are provided, which both are connected to the electronic control unit (8).
